# EUROPÄISCHE PATENTSCHRIFT

(11) **EP 2 447 224 B1**
(45) Veröffentlichungstag und Bekanntmachung des Hinweises auf die Patenterteilung: **24.04.2013**
(21) Anmeldenummer: 10013999.7
(22) Anmeldetag: 27.10.2010
(51) Int. Cl.: C03B 7/00, C03B 7/14

(54) **Glasmaschine zur Herstellung von Behälterglas**
Glass machine for producing container glass
Machine de moulage pour la fabrication de récipients en verre

(43) Veröffentlichungstag der Anmeldung: 02.05.2012
(73) Patentinhaber: Saint-Gobain Oberland AG, 88410 Bad Wurzach (DE)
(72) Erfinder: Neubauer, Dietmar, 88212 Ravensburg (DE); Zimmermann, Harald, 88410 Bad Wurzach (DE)
(74) Vertreter: Lelgemann, Karl-Heinz

(56) Entgegenhaltungen:
- EP-A1- 1 810 954
- WO-A1-2010/047579
- DE-A1- 2 631 951
- US-A- 5 434 616
- SCHREUDERS P: "Un nouveau souffle dans le controle en ligne", VERRE, INSTITUT DU VERRE, PARIS, FR, Bd. 16, Nr. 1, 1. Februar 2010 (2010-02-01), Seiten 16-17, XP001553501, ISSN: 0984-7979
- "AMELIORATION SIGNIFICATIVE DE PERFORMANCES PAR CONTROLE AUTOMATIQUE DU GOB", VERRE, INSTITUT DU VERRE, PARIS, FR, Bd. 9, Nr. 2, 1. April 2003 (2003-04-01), Seite 6/07, XP001160130, ISSN: 0984-7979
- "CONTROLE DE LA VISCOSITE POUR L'OBTENTION D'UNE PARAISON PARFAITE//FORMING A PERFECT GOB: CONTROLLING VISCOSITY", VERRE, INSTITUT DU VERRE, PARIS, FR, Bd. 8, Nr. 4, 1. August 2002 (2002-08-01), Seite 12/13, XP001144388, ISSN: 0984-7979

## Beschreibung

Die Erfindung bezieht sich auf eine Glasmaschine zur Herstellung von Behälterglas, mit einer Kameraanordnung mit einer ersten Thermokamera, die auf einer Vorformseite der Glasmaschine oberhalb der Vorformen längs bewegbar und in bzw. parallel zu einer Tropfeneinfallrichtung, in der Glastropfen in die Vorformen einfallen, ausgerichtet ist.

Mittels derartiger Thermokameras werden die Temperaturverhältnisse im Bereich Vorformen der Glasmaschine ermittelt, um so auf die jeweiligen Vorformen bezogene Temperaturdaten zu sammeln. Diese Temperaturdaten werden für die Steuerung bzw. Regelung einer Kühlvorrichtung benötigt, mittels der die entsprechende Vorform mit Kühlluft beaufschlagbar ist. Aufgrund der seitens der Thermokamera erfaßten Temperaturdaten kann die Kühlluftbeaufschlagung der entsprechenden Vorform so erfolgen, daß die Temperaturverhältnisse der jeweiligen Vorform exakt in dem gewünschten Bereich gehalten werden.

Aus WO 2010/047579 sind bereits Thermokameras für Glasmaschinen bekannt.

Ausgehend von dem vorstehend geschilderten Stand der Technik liegt der Erfindung die Aufgabe zugrunde, die eingangs geschilderte Glasmaschine zur Herstellung von Behälterglas bzw. deren Kameraanordnung so weiter zu bilden, daß zum einen der Betriebsablauf der Glasmaschine verbessert und zum anderen die Qualität der seitens der Glasmaschine hergestellten Glasartikel verbessert werden kann.

Diese Aufgabe wird erfindungsgemäß dadurch gelöst, daß die Kameraanordnung der Glasmaschine eine zweite Tropfenkamera aufweist, die schräg zur ersten Tropfenkamera angeordnet ist und deren Längs- bzw. optische Achse mit der Tropfeneinfallrichtung einen Winkel bildet. Mittels der beiden Thermokameras der Kameraanordnung der erfindungsgemäßen Glasmaschine lassen sich die Verhältnisse beim Übergang der Glastropfen in die Vorformen umfassender und vollständiger erfassen, so daß die Datenbasis, auf deren Grundlage Eingriffe in den Betriebsablauf der Glasmaschine erfolgen können, erheblich vergrößert ist. Mittels der beiden Thermokameras läßt sich darüber hinaus die Geometrie des in die Vorform überführten Glastropfens besser als beim Stand der Technik erfassen.

Die Temperaturverhältnisse des in die Vorform überführten Glastropfens können noch besser gemessen und überwacht werden, wenn die zweite Thermokamera der Kameraanordnung auf einem von dem der ersten Thermokamera unterschiedlichen Wellenlängenbereich eingestellt ist, so daß mittels der beiden Thermokameras ein dreidimensionales Bild der einfallenden Glastropfen, mittels der ersten Thermokamera die Oberflächentemperatur der Glastropfen und mittels der zweiten Thermokamera die Temperatur im Inneren der Glastropfen erfaßbar ist.

Je nach Anforderungsprofil an die örtlichen Gegebenheiten und/oder die Anordnung der Kameraanordnung kann es zweckmäßig sein, wenn die erste Thermokamera der Kameraanordnung aus ihrer Ausrichtung in bzw. parallel zur Tropfeneinfallrichtung in eine Schrägstellung dazu verstellbar ist. Hierzu können die beiden Thermokameras der Kameraanordnung so zueinander eingestellt werden, daß mittels ihnen die Verhältnisse beim Überführen der Glastropfen in die Vorformen optimal erfaßbar sind.

Gemäß einer vorteilhaften Ausführungsform der erfindungsgemäßen Glasmaschine ist deren Kameraanordnung so ausgestaltet, daß die zweite Thermokamera der Kameraanordnung aus der Position, in der ihre Längs- bzw. optische Achse mit der Tropfeneinfallrichtung einen Winkel bildet, in eine Position verstellbar ist, in der ihre Längs- bzw. optische Achse in bzw. parallel zur Tropfeneinfallrichtung ausgerichtet ist. Bei dieser Ausführungsform lassen sich je nach Anforderungsprofil die beiden Thermokameras optimal positionieren, so daß sowohl die Verhältnisse während des Einfalls des Glastropfens von der Rinnenanordnung in die Vorform als auch die Temperaturverhältnisse der Vorformen bzw. der Einzelteile der Vorformen erfasst werden können.

Als besonders vorteilhaft hat es sich erwiesen, wenn die Kameraanordnung eine vorgebbare erste Messposition aufweist, in der die erste und die zweite Thermokamera in bezug auf die Tropfeneinfallrichtung symmetrisch zueinander angeordnet sind und mit ihren Längs- bzw. optischen Achsen jeweils einen Winkel mit der Tropfeneinfallrichtung bilden. In dieser ersten Messposition können mittels der Kameraanordnung dann die Tropfengeometrie, die Tropfentemperatur, die Tropfengeschwindigkeit, die Tropfenposition und die Tropfenzeit optimal erfaßt werden. Die so gewonnenen Daten werden üblicherweise in einer der Kameraanordnung nachgeordneten Steuer- und Regeleinheit der Glasmaschine weiterverarbeitet, so daß sie als Grundlage für die Steuerung bzw. Regelung einer Verstellvorrichtung dienen können, mittels der die Rinnenanordnung der Glasmaschine hinsichtlich ihrer Positionierung optimierbar ist. Etwaige Verunreinigungen etc. der Rinnenanordnung führen somit nicht zu einem spürbaren Verlust an Qualität der mittels der Glasmaschine hergestellten Glasartikel. Selbstverständlich ist es auch möglich, die bezüglich der Tropfentemperatur gewonnene Datengrundlage bei der Steuerung und Regelung der Kühlung der einzelnen Vorformen zu berücksichtigen.

Wenn die Kameraanordnung eine zweite Messposition aufweist, in der die erste und die zweite Thermokamera mit gleichem Abstand und mit ihren Längs- bzw. optischen Achsen parallel zur Tropfeneinfallrichtung angeordnet sind, können die Temperaturverhältnisse an den einzelnen Vorformen optimal erfasst werden. Das gilt sowohl für die Temperatur der Vorformen bzw. der einzelnen Vorformpaare, für die Temperatur des der jeweiligen Vorform zugeordneten Pegels, für die Temperatur der Mündungsform der jeweiligen Vorform und für die Temperatur des in der Vorform hergestellten Glasrohlings bzw. Glaskülbels. Die hier gewonnenen Temperaturdaten können in der bereits erwähnten Steuer- und Regeleinheit der Glasmaschine für eine optimale Temperierung bzw. Kühlung der einzelnen Vorformen eingesetzt werden.

Gemäß einer vorteilhaften Ausführungsform der Erfindung sind mittels der Kameraanordnung an jeder Station der Glasmaschine bis zu vier Vorformen bzw. Vorformpaare, Mündungsformen, Glasrohlinge bzw. -külbel, Pegel und/oder den jeweiligen Vorformen zugeordnete Glastropfen erfaß- bzw. messbar. Vorteilhaft können in einer der Kameraanordnung nachgeschalteten Rechen- und Steuereinheit der Glasmaschine aus den mittels der Kameraanordnung erfaßten bzw. gemessenen Daten die Massen der Glastropfen und/oder die Einfallwinkel der Glastropfen in die Vorformen und/oder die Auftreffpunkte der Glastropfen an bzw. in den Vorformen ermittelt werden. Die so ermittelten Werte können mit für die jeweilige Vorform vorgegebenen Sollwerten verglichen werden, wobei daraufhin dann Eingriffe in die Steuerung der Glasmaschine erfolgen können.

Zweckmäßigerweise ist die Glasmaschine mit einer Verstellvorrichtung für die Rinnenanlage versehen, mittels der die Rinnenanlage in Abhängigkeit von den in der Rechen- und Steuereinheit ermittelten Werten für die Masse, den Einfallwinkel und den Auftreffpunkt der Glastropfen verstellbar ist.

Zweckmäßigerweise können die mittels der vorstehend geschilderten Kameraanordnung erfaßten Daten optimal eingesetzt werden, wenn die Glasmaschine auch eine Kühlungssteuerung zur Steuerung bzw. Regelung der Kühlung der Vorformen aufweist, mittels der die Kühlluftbeaufschlagung der Vorformen in Abhängigkeit von in der Rechen- und Speichereinheit vorliegenden bzw. ermittelten Werten für die Temperaturen der Vorformpaare, Mündungsformen, Glaskülbel, Pegel und/oder Glastropfen einstellbar ist.

Die Thermokameras können zweckmäßigerweise als Infrarotkameras ausgebildet sein.

Wenn die Kameraanordnung an einem Mitnehmerschlitten angebracht ist, der auf einer Linearachse längs der Vorformseite der Glasmaschine hin und her bewegbar ist, ist es möglich, die Kameraanordnung über jeder Station der Glasmaschine optimal zu positionieren, und das bei einem vergleichsweise geringen technisch-konstruktiven Aufwand.

Im Folgenden wird die Erfindung anhand von Ausführungsformen unter Bezugnahme auf die Zeichnungen näher erläutert. Es zeigen:
- Figur 1: eine Prinzipdarstellung einer ersten Ausführungsform einer erfindungsgemäßen Glasmaschine zur Herstellung von Behälterglas;
- Figur 2: eine Prinzipdarstellung einer weiteren Ausführungsform der erfindungsgemäßen Glasmaschine zur Herstellung von Behälterglas in einer ersten Messposition einer Kameraanordnung; und
- Figur 3: eine Prinzipdarstellung der in Figur 2 gezeigten Ausführungsform der erfindungsgemäßen Glasmaschine zur Herstellung von Behälterglas in einer zweiten Messposition.

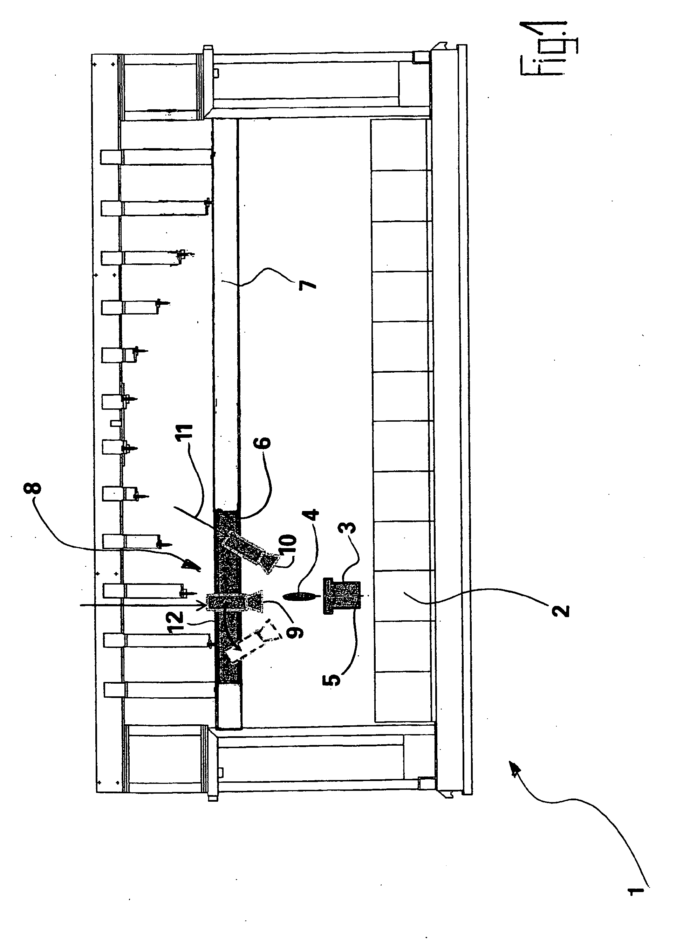

Eine in Figur 1 hinsichtlich ihrer für die vorliegende Erfindung wesentlichen Bestandteile gezeigte Glasmaschine 1 dient der Herstellung von Behälterglas. Hierzu weist die Glasmaschine 1 eine Vielzahl von Stationen 2 auf, an denen jeweils z.B. vier Vorformen 3 vorgesehen sein können, mittels denen aus einem in sie eingeführten Glastropfen 4 ein Glasrohling herstellbar ist. Je Station 2 können beispielsweise bis zu vier Vorformen 3 vorgesehen sein, wobei in der Figur lediglich eine Vorform 3 dargestellt ist. In in Figur 1 nicht gezeigten Fertigformen wird der in den Vorformen 3 hergestellte Glasrohling weiter verarbeitet.

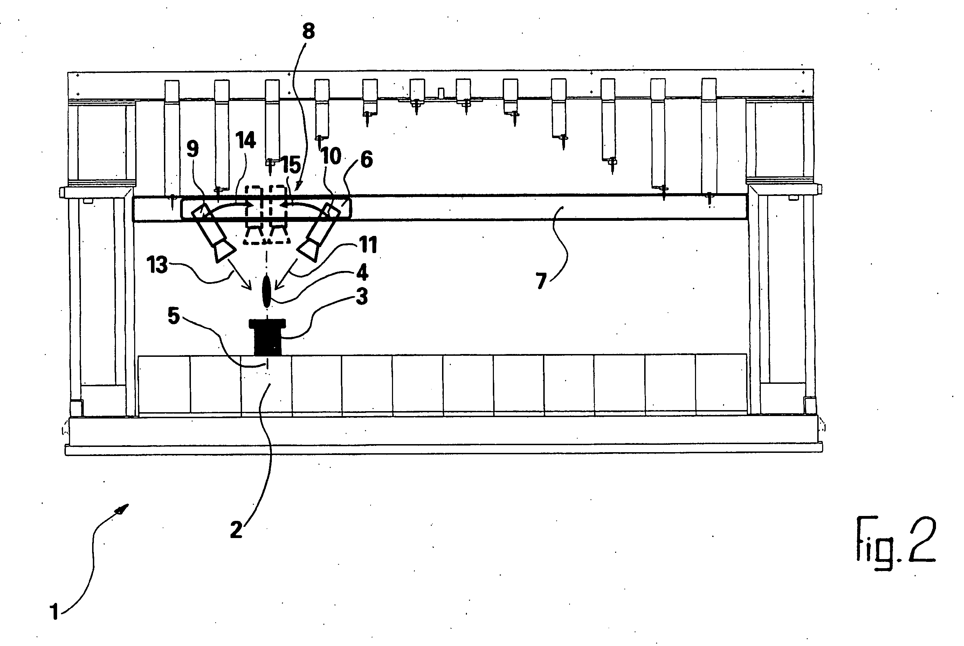

Die Versorgung der Stationen 2 bzw. die Versorgung der diesen Stationen 2 zugeordneten Vorformen 3 mit Glastropfen 4 erfolgt mittels einer Rinnenanordnung, wobei die Glastropfen 4 durch die Rinnen in eine Position oberhalb der Vorformen 3 laufen und von dort aus den in den Figuren nicht dargestellten Rinnen in die Vorformen 3 fallen. Für den in den Figuren 1 und 2 gezeigten Glastropfen 4 ist dies dargestellt, wobei die Tropfeneinfallrichtung 5 durch eine strichpunktierte Linie gezeigt ist.

Des weiteren gehört zu der in Figur 1 gezeigten Ausführungsform der erfindungsgemäßen Glasmaschine 1 ein Mitnehmerschlitten 6, der linear beweglich an einer glasmaschinenfesten Linearachse 7 angeordnet ist. Mittels eines in Figur 1 nicht gezeigten Antriebssystems kann der Mitnehmerschlitten 6 in Längsrichtung der Glasmaschine 1 verfahren werden, wobei er oberhalb jeder Station 2 der Glasmaschine 1 positioniert werden kann.

In Figur 1 ist der Mitnehmerschlitten 6 so positioniert, daß eine am Mitnehmerschlitten vorgesehene Kameraanordnung 8 sich so oberhalb der in Figur 1 dritten Station 2 der Glasmaschine 1 befindet, daß eine erste Thermokamera 9 in der Tropfeneinfallrichtung 5 ausgerichtet oberhalb der Vorform 3 angeordnet ist. Bei der ersten Thermokamera 9 handelt es sich um eine Infrarotkamera, die auf einen bestimmten Wellenbereich eingestellt ist. Entsprechend kann mittels der ersten Thermokamera 9 die Temperatur an der Oberfläche des Glastropfens 4 ermittelt werden.

Zu der Kameraanordnung 8 gehört eine zweite Thermokamera 10, die ebenfalls als Infrarotkamera ausgebildet ist und auf einen anderen Wellenlängenbereich eingestellt ist. Mittels der zweiten Thermokamera 10 kann die Temperatur im Inneren des Glastropfens 4 ermittelt werden.

Darüber hinaus kann durch die seitens der beiden Thermokameras 9, 10 ermittelten Daten quasi ein dreidimensionales Bild des in die Vorform 3 einfallenden Glastropfens 4 geschaffen werden.

Die mittels der Kameraanordnung 8 bzw. mittels der ersten Thermokamera 9 und der zweiten Thermokamera 10 erfaßten Daten dienen der Ermittlung der Massen der Glastropfen 4 sowie der Erfassung des Einfallwinkels des Glastropfens 4 in die Vorform 3 und des Auftreffpunkts der Glastropfen 4 an bzw. in der Vorform 3. Aufgrund der mittels der Kameraanordnung 8 und einer in der Figur nicht gezeigten Rechen- und Steuereinheit können Abweichungen der ermittelten Werte von vorgebbaren Sollwerten erfasst werden. Darüber hinaus kann mittels der Rechen- und Steuereinheit über eine in der Figur ebenfalls nicht gezeigte Verstellvorrichtung die Positionierung der Rinnenanordnung so geändert werden, daß der Einfallwinkel und der Auftreffpunkt eines Glastropfens 4 optimiert bzw. die Positionierung der Rinnenanordnung so gewählt wird, daß die Verhältnisse beim Eintreten des Glastropfens 4 in die Vorform 3 optimal sind.

Hierzu ist es, wie sich aus Figur 1 ergibt, zweckmäßig, wenn die zweite Thermokamera 10 so ausgerichtet ist, daß ihre optische bzw. Längsachse 11 mit der Tropfeneinfallrichtung 5 einen Winkel einschließt, d.h., daß die Längsachse 11 der zweiten Thermokamera 10 schräg zur Tropfeneinfallrichtung 5 verläuft.

Um die Möglichkeiten des Einsatzes der ersten Thermokamera 9 bei der Erfassung der Geometrie, der Temperatur, der Geschwindigkeit, der Position und des zeitlichen Ablaufs des Falls des Glastropfens 4 zu erweitern, ist, wie in Figur 1 durch einen gekrümmten Pfeil 12 dargestellt ist, die Möglichkeit gegeben, auch die erste Thermokamera 9 aus ihrer Ausrichtung, in der ihre optische bzw. Längsachse 13 parallel zur Tropfeneinfallrichtung 5 verläuft, in eine Schrägposition zu verbringen, in der ihre optische bzw. Längsachse 13 schräg zur Tropfeneinfallrichtung 5 verläuft. In Figur 1 ist die erste Thermokamera 9 gestrichelt in dieser Schrägposition dargestellt.

Je nach Anforderungsprofil können die beiden Thermokameras 9, 10 der Kameraanordnung 8 so ausgerichtet werden, daß die Verhältnisse beim Übergang des Glastropfens 4 aus der in der Figur nicht gezeigten Rinnenanordnung in die Vorform 3 optimal erfasst werden können.

Selbstverständlich können mittels der beiden Thermokameras 9, 10 der Kameraanordnung 8 auch die Temperaturverhältnisse an der jeweiligen Vorform 3 erfaßt werden. Die auf die Vorform 3 bezogenen und erfaßten Temperaturdaten können als Grundlage für die Steuerung bzw. Regelung einer Kühlvorrichtung dienen, mittels der die Vorformen separat kühlbar sind.

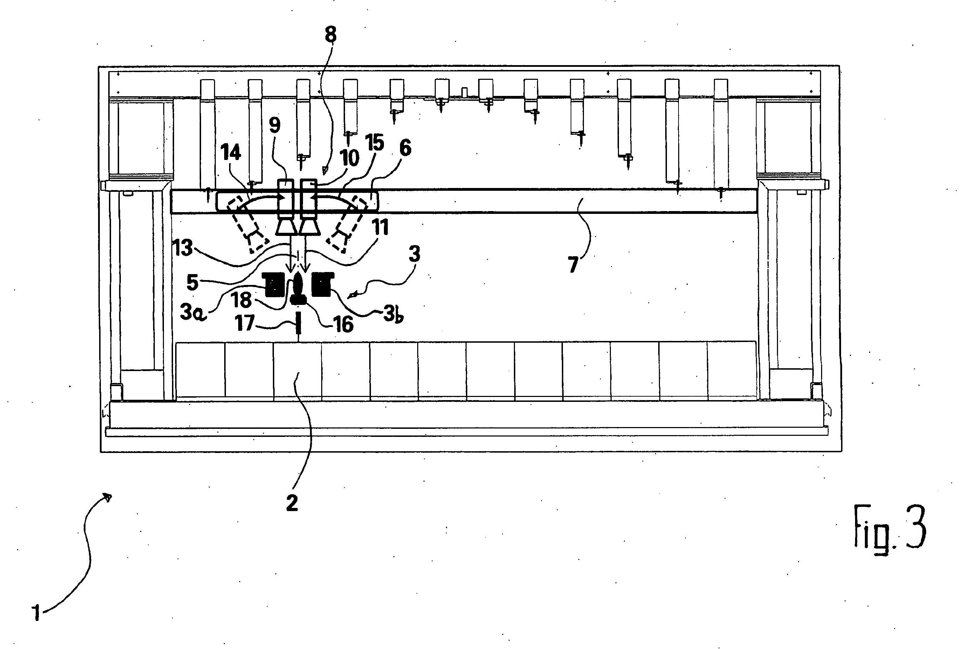

Bei der in den Figuren 2 und 3 gezeigten Ausführungsform der erfindungsgemäßen Glasmaschine 1 sind am Mitnehmerschlitten 6 beide Thermokameras 9, 10 verschwenkbar angeordnet. Im Falle der in Figur 2 gezeigten ersten Messposition befinden sich die beiden Thermokameras 9, 10, wie durch die durchgezogenen Linien dargestellt, in einer zur Tropfeneinfallrichtung 5 symmetrischen Lage, d.h., die optische bzw. Längsachse 11 der zweiten Thermokamera 10 und die optische bzw. Längsachse 13 der ersten Thermokamera 9 schließen mit der Tropfeneinfallrichtung 5 jeweils einen gleich großen Winkel ein. Die Anordnung der beiden Thermokameras 9, 10 ist in bezug auf die Tropfeneinfallrichtung 5 symmetrisch zueinander. Die beiden Thermokameras 9, 10 sind auf unterschiedliche Wellenlängenbereiche eingestellt. Bei der in Figur 2 gezeigten Anordnung der Thermokameras 9, 10 können die Tropfengeometrie, die Tropfentemperatur, die Tropfengeschwindigkeit, die Tropfenposition und die Tropfenzeit optimal erfasst werden. Die so gewonnenen Daten können in der in den Figuren nicht gezeigten Steuer- und Regeleinheit der Glasmaschine 1 insbesondere für eine optimale Einstellung bzw. Positionierung der Rinnenanordnung, aber auch zur Steuerung und Regelung der Kühlung der einzelnen Vorformen eingesetzt werden. Unabhängig von dem Zustand der einzelnen Rinnen der Rinnenanordnung können diese so optimal positioniert werden.

Im Falle der in Figur 3 gezeigten zweiten Messposition der Kameraanordnung 8 sind die beiden Thermokameras 9, 10, wie dies durch die Pfeile 14, 15 in Figur 2 dargestellt ist, aus ihrer zur Tropfeneinfallrichtung 5 angewinkelten Position in eine Position verschwenkt, in der die optische bzw. Längsachse 11 der zweiten Thermokamera 10 und die optische bzw. Längsachse 13 der ersten Thermokamera 9 parallel zur Tropfeneinfallrichtung 5 ausgerichtet sind. In Figur 3 sind die beiden Thermokameras 9, 10 in der zweiten Messstellung durch durchgezogene Linien dargestellt; in diese zweite Messstellung geraten die Thermokameras 9, 10 aus der mit gestrichelten Linien dargestellten ersten Messposition, wie dies durch die Pfeile 14, 15 in Figur 3 gezeigt ist.

In dieser in Figur 3 gezeigten Messposition ist die Vorform 3 in das entsprechende Vorformpaar 3a, 3b zweigeteilt, so daß außer der Temperatur des Vorformpaars 3a, 3b auch die Temperatur einer Mündungsform 16, die Temperatur eines der Vorform 3 zugeordneten Pegels 17 und die Temperatur eines in der Vorform 3 hergestellten Glasrohlings bzw. Glaskülbels 18 optimal erfasst werden können.

Die in der in Figur 3 gezeigten Messposition erfaßten Temperaturdaten dienen gemeinsam mit den in der in Figur 2 gezeigten Messposition erfaßten, auf den Glastropfen 4 bezogenen Temperaturdaten als Grundlage für die Steuer- und Regeleinheit der Glasmaschine 1, soweit die Kühlung der einzelnen Vorformen 3 bzw. deren Kühlluftbeaufschlagung betroffen ist.

## Patentansprüche

1. Glasmaschine zur Herstellung von Behälterglas, mit einer Kameraanordnung (8) mit einer ersten Thermokamera (9), die auf einer Vorformseite der Glasmaschine (1) oberhalb der Vorformen (3) angeordnet ist, und einer zweiten Thermokamera (10), die schräg zur ersten Thermokamera (9) ausgerichtet ist und deren Längs- bzw. optische Achse (11) mit einer Tropfeneinfallrichtung (5), in der Glastropfen (4) in die Vorformen (3) einfallen, einen Winkel bildet, **dadurch gekennzeichnet, dass** die Kameraanordnung (8) oberhalb der Vorformen (3) längsbewegbar ist und dass die erste Thermokamera (9) in bzw. parallel zur Tropfeneinfallrichtung (5) ausgerichtet ist.

2. Glasmaschine nach Anspruch 1, bei der die zweite Thermokamera (10) der Kameraanordnung (8) auf einem von dem der ersten Thermokamera (9) unterschiedlichen Wellenlängenbereich eingestellt ist, so daß mittels der beiden Thermokameras (9, 10) ein dreidimensionales Bild der einfallenden Glastropfen (4), mittels der ersten Thermokamera (9) die Oberflächentemperatur der Glastropfen (4) und mittels der zweiten Thermokamera (10) die Temperatur im Inneren der Glastropfen (4) erfaßbar ist.

3. Glasmaschine nach Anspruch 1 oder 2, bei der die erste Thermokamera (9) der Kameraanordnung (8) aus ihrer Ausrichtung in bzw. parallel zur Tropfeneinfallrichtung (5) in eine Schrägstellung dazu verstellbar ist.

4. Glasmaschine nach einem der Ansprüche 1 bis 3, bei der die zweite Thermokamera (10) der Kameraanordnung (8) aus der Position, in der ihre Längs- bzw. optische Achse (11) mit der Tropfeneinfallrichtung (5) einen Winkel bildet, in eine Position verstellbar ist, in der ihre Längs- bzw. optische Achse (11) in bzw. parallel zur Tropfeneinfallrichtung (5) ausgerichtet ist.

5. Glasmaschine nach Anspruch 4, bei der die Kameraanordnung (8) eine erste Messposition aufweist, in der die erste (9) und die zweite Thermokamera (10) in bezug auf die Tropfeneinfallrichtung (5) symmetrisch,zueinander angeordnet sind und mit ihren Längs- bzw. optischen Achsen (13, 11) jeweils einen Winkel mit der Tropfeneinfallrichtung (5) bilden.

6. Glasmaschine nach Anspruch 4 oder 5, bei der die Kameraanordnung (8) eine zweite Messposition aufweist, in der die erste (9) und die zweite Thermokamera (10) mit gleichem Abstand und mit ihren Längs- bzw. optischen Achsen (13, 11) parallel zur Tropfeneinfallrichtung (5) angeordnet sind.

7. Glasmaschine nach einem der Ansprüche 1 bis 6, bei der mittels der Kameraanordnung (8) an jeder Station (2) der Glasmaschine (1) bis zu vier Vorformen (3) bzw. Vorformpaare (3a, 3b), Mündungsformen (16), Glasrohlinge bzw. -külbel (18), Pegel (17) und den jeweiligen Vorformen (3) zugeordnete Glastropfen (4) erfaß- bzw. messbar sind.

8. Glasmaschine nach einem der Ansprüche 1 bis 7, bei der in einer der Kameraanordnung (8) nachgeschalteten Rechen- und Steuereinheit der Glasmaschine (1) aus den mittels der Kameraanordnung (8) erfaßten bzw. gemessenen Daten die Massen der Glastropfen (4) und/oder die Einfallwinkel der Glastropfen (4) in die Vorformen (3) und/oder die Auftreffpunkte der Glastropfen (4) an bzw. in den Vorformen (3) ermittelbar sind.

9. Glasmaschine nach Anspruch 8, mit einer Verstellvorrichtung für die Rinnenanlage der Glasmaschine (1), mittels der die Rinnenanlage in Abhängigkeit von den in der Rechen- und Steuereinheit ermittelten Werten für die Masse, den Einfallwinkel und die Auftreffpunkte der Glastropfen (4) verstellbar ist.

10. Glasmaschine nach Anspruch 8 oder 9, mit einer Kühlungssteuerung zur Steuerung bzw. Regelung der Kühlung der Vorformen (3), mittels der die Kühlluftbeaufschlagung der Vorformen (3) in Abhängigkeit von in der Rechen- und Steuereinheit vorliegenden bzw. ermittelten Werten für die Temperaturen der Vorformen (3) bzw. Vorformpaare (3a, 3b), Mündungsformen (16), Glasrohlingen bzw. -külbeln (18), Pegeln (17) und/oder Glastropfen (4) einstellbar ist.

11. Glasmaschine nach einem der Ansprüche 1 bis 10, deren Thermokameras (9, 10) als Infrarotkameras ausgebildet sind.

12. Glasmaschine nach einem der Ansprüche 1 bis 11, bei der die Kameraanordnung (8) an einem Mitnehmerschlitten (6) angebracht ist, der auf einer Linearachse (7) längs der Vorformseite der Glasmaschine (1) hin und her bewegbar ist.

## Claims

1. A glassmaking machine for the manufacture of container glass, with a camera arrangement (8) with a first thermal camera (9), which is arranged on a preform side of the glassmaking machine (1) above the preforms (3), and a second thermal camera (10) which is aligned at an angle to the first thermal camera (9) and whose longitudinal, i.e. optical, axis (11) forms an angle with an incident drop direction (5), in which glass drops (4) fall into the preforms (3), **characterised in that**, the camera arrangement (8) can be moved longitudinally above the preforms (3), and **in that** the first thermal camera (9) is aligned in, or parallel to, the incident drop direction (5).

2. The glassmaking machine in accordance with Claim 1, in which the second thermal camera (10) of the camera arrangement (8) is adjusted to a wavelength region that differs from that of the first thermal camera (9), such that a three-dimensional image of the incident glass drop (4) can be registered by means of the two thermal cameras (9, 10), the surface temperature of the glass drop (4) can be registered by means of the first thermal camera (9), and the temperature in the interior of the glass drop (4) can be registered by means of the second thermal camera (10).

3. The glassmaking machine in accordance with Claim 1 or 2, in which the first thermal camera (9) of the camera arrangement (8) can be adjusted from its alignment in, or parallel to, the incident drop direction (5) into a setting at an angle to the latter.

4. The glassmaking machine in accordance with one of the Claims 1 to 3, in which the second thermal camera (10) of the camera arrangement (8) can be adjusted from the position in which its longitudinal, i.e. optical, axis (11) forms an angle with the incident drop direction (5) into a position in which its longitudinal, i.e. optical, axis (11) is aligned in, or parallel to, the incident drop direction (5).

5. The glassmaking machine in accordance with Claim 4, in which the camera arrangement (8) has a first measurement position, in which the first (9) and second thermal cameras (10) are arranged symmetrically relative to one another with respect to the incident drop direction (5), and with their longitudinal, i.e. optical axes (13, 11) in each case form an angle with the incident drop direction (5).

6. The glassmaking machine in accordance with Claim 4 or 5, in which the camera arrangement (8) has a second measurement position, in which the first (9) and second thermal cameras (10) are arranged with the same separation distance, and with their longitudinal, i.e. optical, axes (13, 11) parallel to the incident drop direction (5).

7. The glassmaking machine in accordance with one of the Claims 1 to 6, in which by means of the camera arrangement (8) at each station (2) of the glassmaking machine (1) up to four preforms (3), or preform pairs (3a, 3b), finish shapes (16), glass blanks or parisons (18), levels (17), and the glass drops (4) associated with respective preforms (3), can be registered and measured.

8. The glassmaking machine in accordance with one of the Claims 1 to 7, in which in a processing and control unit of the glassmaking machine (1) located downstream of the camera arrangement (8), the masses of the glass drops (4) and/or the incident angles of the glass drops (4) into the preforms (3), and/or the impact points of the glass drops (4) on or in the preforms (3) can be determined from the data registered and measured by means of the camera arrangement (8).

9. The glassmaking machine in accordance with Claim 8, with an adjustment device for the channelling system of the glassmaking machine (1), by means of which the channelling system can be adjusted as a function of the values determined in the processing and control unit for the masses, the incident angles and the impact points of the glass drops (4).

10. The glassmaking machine in accordance with Claim 8 or 9, with a cooling controller for purposes of controlling, i.e. regulating, the cooling of the preforms (3), by means of which the impingement of the cooling air onto the preforms (3) can be adjusted as a function of the values present or determined in the processing and control unit for the temperatures of the preforms (3) or preform pairs (3a, 3b), finish shapes (16), glass blanks or parisons (18), levels (17), and/or glass drops (4).

11. The glassmaking machine in accordance with one of the Claims 1 to 10, whose thermal cameras (9, 10) are designed as infrared cameras.

12. The glassmaking machine in accordance with one of the Claims 1 to 11, in which the camera arrangement (8) is attached to a carriage (6), which can be moved backwards and forwards on a linear axis (7) along the preform side of the glassmaking machine (1).

## Revendications

1. Machine de moulage de verre pour la fabrication de verre pour récipients, avec un dispositif de caméras (8) avec une première caméra thermique (9), laquelle est disposée sur un côté de préforme de la machine de moulage de verre (1) au-dessus des préformes (3), et avec une deuxième caméra thermique (10) qui est orientée obliquement à la première caméra thermique (9) et dont l'axe longitudinal et/ou optique (11) forme un angle avec une direction d'incidence de gouttes (5) dans laquelle des gouttes de verre (4) tombent dans les préformes (3), **caractérisée en ce que** le dispositif de caméras (8) est mobile longitudinalement au-dessus des préformes (3) et **en ce que** la première caméra thermique (9) est orientée dans la direction d'incidence des gouttes (5) et/ou parallèlement à celle-ci.

2. Machine de moulage de verre selon la revendication 1, dans laquelle la deuxième caméra thermique (10) du dispositif de caméras (8) est réglée sur une plage de longueurs d'ondes différente de celle de la première caméra thermique (9) de sorte qu'à l'aide des deux caméras thermiques (9, 10), il est possible de capter une image tridimensionnelle des gouttes de verre incidentes (4), la température de surface des gouttes de verre (4) à l'aide de la première caméra thermique (9) et la température à l'intérieur des gouttes de verre (4) à l'aide de la deuxième caméra thermique (10).

3. Machine de moulage de verre selon la revendication 1 ou 2, dans laquelle il est possible de changer l'orientation en direction d'incidence de gouttes (5) et/ou parallèlement à celle-ci de la première caméra thermique (9) du dispositif de caméras (8) pour passer à une position oblique par rapport à celle-ci.

4. Machine de moulage de verre selon l'une des revendications 1 à 3, dans laquelle la deuxième caméra thermique (10) du dispositif de caméras (8) peut changer de position pour passer de sa position dans laquelle son axe longitudinal et/ou optique (11) forme un angle avec la direction d'incidence de gouttes (5) à une position dans laquelle son axe longitudinal et/ou optique (11) est orienté en direction d'incidence des gouttes (5) et/ou parallèlement à celle-ci.

5. Machine de moulage de verre selon la revendication 4, dans laquelle le dispositif de caméras (8) présente une première position de mesurage dans laquelle la première (9) et la deuxième caméra thermique (10) sont disposées symétriquement l'une par rapport à l'autre compte tenu de la direction d'incidence de gouttes (5) et forment avec leurs axes longitudinaux et/ou optiques (13, 11) respectivement un angle avec la direction d'incidence de gouttes (5).

6. Machine de moulage de verre selon la revendication 4 ou 5, dans laquelle le dispositif de caméras (8) présente une deuxième position de mesurage, dans laquelle la première (9) et la deuxième caméra thermique (10) sont disposées avec un même écartement par rapport à la direction d'incidence de gouttes (5) et avec leurs axes longitudinaux et/ou optiques (13, 11) parallèlement à cette direction.

7. Machine de moulage de verre selon l'une des revendications 1 à 6, dans laquelle on peut détecter et/ou mesurer à l'aide du dispositif de caméras (8) à chaque station (2) de la machine de moulage de verre (1) jusqu'à quatre préformes (3) et/ou paires de préformes (3a, 3b), moules de bague (16), ébauches et/ou paraisons en verre (18), mandrins de moule de bague (17) et les gouttes de verre (4) associées aux préformes (3) respectives.

8. Machine de moulage de verre selon l'une des revendications 1 à 7, dans laquelle il est possible de déterminer, dans une unité de calcul et de commande de la machine de moulage de verre (1) montée en aval du dispositif de caméras (8), à partir des données détectées et/ou mesurées à l'aide du dispositif de caméras (8), les masses des gouttes de verre (4) et/ou les angles d'incidence des gouttes de verre (4) dans les préformes (3) et/ou les points d'impact des gouttes de verre (4) sur et/ou dans les préformes (3).

9. Machine de moulage de verre selon la revendication 8, avec un dispositif de déplacement pour le dispositif de chenal de la machine de moulage de verre (1), à l'aide duquel il est possible de déplacer le dispositif de chenal en fonction des valeurs déterminées dans l'unité de calcul et de commande pour la masse, l'angle d'incidence et les points d'impact des gouttes de verre (4).

10. Machine de moulage de verre selon les revendications 8 ou 9, avec une commande de refroidissement pour commander et/ou réguler le refroidissement des préformes (3), à l'aide de laquelle il est possible de régler l'alimentation en air de refroidissement des préformes (3) en fonction de valeurs existantes et/ou déterminées dans l'unité de calcul et de commande pour les températures des préformes (3) et/ou paires de préformes (3a, 3b), moules de bague (16), ébauches et/ou paraisons en verre (18), mandrins de moule de bague (17) et les gouttes de verre (4).

11. Machine de moulage de verre selon l'une des revendications 1 à 10, dont les caméras thermiques (9, 10) sont réalisées en tant que caméras infrarouges.

12. Machine de moulage de verre selon l'une des revendications 1 à 11, dans laquelle le dispositif de caméras (8) est mis en place sur un chariot d'entraînement (6), lequel peut se déplacer dans le sens aller et retour sur un axe linéaire (7) le long du côté de préforme de la machine de moulage de verre (1).
